# EUROPEAN PATENT APPLICATION

(11) **EP 2 856 886 A1**
(43) Date of publication of application: **08.04.2015**
(21) Application number: 13425132.1
(22) Date of filing: 01.10.2013
(51) Int. Cl.: A23L 1/01, A23L 3/02, A23L 1/025, A23L 1/212, A23L 1/221, A23L 1/224

(54) **Method for obtaining a food preparation based on Alliaceae vegetables and food preparation obtained by such a method**

(71) Applicant: Società Agricola Taflo s.s. di Visentin Lucia & C., 36026 Pojana Maggiore (VI) (IT)
(72) Inventor: Visentin, Lucia, 36026 Pojana Maggiore (Vicenza) (IT); Negretto, Pierguido, 36026 Pojana Maggiore (Vicenza) (IT)
(74) Representative: Zambardino, Umberto

(57) **Abstract**

The present invention relates to a food preparation comprising at least one vegetable from Alliacee divided into separate pieces and subjected preferably to partial dehydratation, an acidity regulator and optionally at least one edible oil in mixture to each other. The Alliaceae vegetable is preferably onion, garlic or combinations thereof.

Such food preparation can be obtained according to the present invention by a method comprising the steps of 1) subdivision of at least one vegetable from Alliaceae into separate pieces, 2) addition of an acidity regulator to said at least one vegetable from Alliaceae in separate pieces to form a mixture, 3) optional addition of an edible oil to said mixture, 4) irradiation of the mixture with a light beam containing ultraviolet light, 5) packaging of the mixture irradiated with a light beam containing ultraviolet light in at least one container for foods and 6) sanitization of the mixture packed in said at least one container for foods by means of microwaves.

Said mixture can be irradiated with ultraviolet rays, preferably UV-C rays (100-280 nm) or can be irradiated with high-intensity pulses of a beam of polychromatic light containing ultraviolet rays.

The packaged food preparation of the invention can be used effectively as a vegetable food base both for the direct preparation of food or food products ready to eat, by mixing it to further ingredients of the recipe of interest, and for the preparation of further intermediate food preparations, such as fried based on Alliaceae which in turn will constitute starting food base for obtaining food or food products, all according to the most varied recipes in particular but not exclusively of the Mediterranean cuisine.

## Description

### Field of application

The present invention relates to the food sector and in particular to the production of food preparations for household, industrial and/or collective catering use as food bases in the subsequent preparation of finished foods or food products and particularly food products ready for consumption.

In particular, the present invention relates to a food preparation based on vegetables from Alliaceae which can be used effectively as a food base in association with vegetable oil in particular for the uses mentioned above.

The present invention also relates to a method for obtaining a food preparation of the above type as well as a package containing such a food preparation.

### Prior Art

As it is known, the household, industrial or collective catering preparation of foods or food products such as sauces, soups, broths, etc. often requires the prior preparation of a fried based on vegetables, especially onion and/or garlic. The fried food is used as a food base within said household, industrial or collective catering preparation for giving specific characteristics of taste and roundness to the final food or food product, in particular according to the dictates of the Mediterranean cuisine.

The food components commonly used for the preparation of a fried are: vegetable oil, onion and/or garlic to which additional vegetable components can be added such as carrots and celery and/or spices such as salt and pepper.

Although the fried based on vegetables such as onion and/or garlic has been always part of culinary tradition, in particular of the Mediterranean cuisine and is fundamental to many recipes and preparations, its implementation is difficult and requires considerable precautions as well as relatively long times so as to obtain a vegetable food base that has acceptable organoleptic and nutritional characteristics for subsequent use in the preparation of the final food or food product.

In fact, it is noteworthy that vegetables such as onion and garlic, as they are constituted by about 90% water (for example the National Research Institute for food and nutrition (INRAN) reports a value of 92.1% for crude onion), must be cooked slowly and gently to prevent them from being burned or darkened rather than just browned (or turn blond) as required by the traditional preparation of a good fry. In addition, there is to say that the vegetables are previously processed before being fried through normal operations such as peeling and cutting which requires a certain time and, in the case of the onion for example, this also involves a certain physical discomfort for the operator due to the delivery of substances that make eyes water which are released during the cutting of this vegetable.

Fried of the above type are also prepared at industrial level by the food industry in the context of the production lines of food preparations that incorporate them, for example fresh or frozen food products such as sauces, soups, broths, ready meals based on rice, pasta, meat and/or fish etc. In this case, there is to say that the food industry usually purchases from specialized companies a vegetable material, such as garlic and/or onion, already worked as to peeling and possible milling; that material is used as starting material for the preparation of fried.

However, a vegetable material so purchased has a short shelf life because it is very susceptible to degradation phenomena and bacterial contamination, and it also needs to be strictly stored under conditioned temperature until use.

This clearly entails storage and managing costs of the worked vegetable material which are quite relevant.

Even if one would purchase whole vegetables, the above costs would be mitigated only in part and it would be however necessary to provide appropriate equipments for peeling and chopping the vegetables to be used in the production line of the food products with a consequent increase in total costs resulting from design of such equipments and from managing of the entire production process.

Patent application US 2002/071896 discloses a food preparation comprising a fat phase, in particular oil, a vegetable material such as onion, garlic etc. suitably cut into cubes or slices and salt. Such preparation can be used for obtaining fries. However, the above patent application requires the addition of a relevant amount of salt for preservation purpose and for removing an aqueous liquid from the vegetable material which results in an alteration of the original organoleptic characteristics of such vegetable material.

Patent application FR 2594006 discloses a food preparation as a paste (patè) comprising a grinded vegetable material such as grinded onion or grinded garlic, an edible oil acting as a lubricant as well as salt and a regulator of acidity for improving preservation of the product.

However, in the food preparation disclosed by the aforementioned French application it is required the presence of a significant quantity of salt in order to preserve the aroma of the vegetable material and have a relatively long shelf life.

The technical problem underlying the present invention is to provide a food preparation based on vegetables from Alliaceae having characteristics such that it can be used effectively as a food base in the household, industrial or collective catering preparation of foods or food products without having the disadvantages previously cited with reference to the prior art mentioned above.

### Summary of the invention

This technical problem is solved according to the present invention by a food preparation comprising at least one vegetable from Alliaceae divided into distinct pieces and an acidity regulator in mixture between them, said food preparation being irradiated with a light beam containing ultraviolet rays and being sanitized by means of microwaves.

According to an embodiment of the invention, the food preparation is irradiated continuously with ultraviolet rays, preferably UV-C rays (100-280 nm).

According to another embodiment, particularly preferred, the food preparation is irradiated with high-intensity pulses of a beam of polychromatic light containing ultraviolet rays according to a technique known per se as HILP (High Intense Pulsed Light).

According to a further embodiment of the invention, said food preparation also contains an edible oil.

The food preparation according to the invention may be obtained by a method comprising the steps of:
- subdivision of at least one vegetable from Alliaceae into separate pieces;
- addition of an acidity regulator to said at least one vegetable from Alliaceae in separate pieces to form a mixture,
- irradiation of the mixture with a light beam containing ultraviolet light,
- packaging of the mixture irradiated with a light beam containing ultraviolet light in at least one container for foods,
- cold sanitization of the mixture packed in said at least one container for foods by means of microwaves.

According to an embodiment of the invention, the irradiation step is carried out by irradiating the mixture containing the at least one vegetable from Alliaceae in separate pieces and the acidity regulator with ultraviolet light, in particular UV-C rays (280-100 nm), for a time comprised between 1 second and 40 seconds.

According to another embodiment of the invention, particularly preferred, the food preparation is irradiated with high-intensity pulses of a polychromatic light beam containing ultraviolet rays.

In such an embodiment, the technique for pulsed light irradiation is known per se as HILP (High Intense Pulsed Light). The duration of the pulses is in the order of some hundreds of microseconds (about 360 microseconds per pulse) while the energy of each single light pulse may range depending on the distance of the radiation source from the food; generally it is 0.5-1.2 J/cm⁻². The overall treatment time, intended as the product of the duration of each pulse for the number of pulses is comprised between 1 second and 10 seconds, preferably 3-5 seconds. The radiation source is of the conventional type, e.g. a Xenon lamp.

Preferably, the sanitization of the packed mixture is carried out for a time comprised between 5 and 30 seconds maintaining said packed mixture substantially at room temperature, i.e. the packed mixture is not subjected to any substantial heating due to the application of microwaves.

According to another embodiment, the method of the invention further comprises the step of adding an edible oil to the mixture containing the at least one vegetable from Alliaceae in separate pieces and the acidity regulator. The addition of the edible oil is carried out before irradiating the mixture with a light beam containing ultraviolet light so as to also subject the edible oil to the sanitization achieved through this treatment.

According to a preferred embodiment, the method according to the invention further comprises, after the addition of the acidity regulator and before the step of irradiating with a light beam containing ultraviolet light, the step of subjecting said at least one vegetable from Alliaceae divided into distinct pieces in mixture with the acidity regulator to partial dehydration until a predetermined moisture content is reached.

The present invention also relates to a package comprising a container for foods and a food preparation as above contained in said container for foods.

The characteristics and advantages of the present invention will be more apparent in the detailed description and in the examples that follow which are provided for indicative and of non-limiting purposes.

### Detailed Description

The term "Alliaceae" means in this description a family of monocotyledonous plants mainly comprising the genus *Allium,* and often also classified among the Liliaceae. This cosmopolitan family includes herbaceous plants most often fitted with bulb, sometimes a rhizome. The symmetrical flowers have upper ovary and forms an umbrella-like inflorescence while the fruit is like a capsule.

Alliaceae used in the present invention are preferably selected from the group comprising onion, leek, garlic, scallion, Borettane, chive and combinations thereof.

Alliaceae particularly preferred for use in the preparation of the food preparation according to the invention are onion, garlic or combinations thereof.

The term "vegetable from Alliaceae " means in this description any edible part obtained or derived from plants of at least one type belonging to the family of Alliaceae (in particular onion and/or garlic). Alliaceae vegetables may be previously machined in part immediately after the collection to obtain the edible parts of interest and in part stored in a conditioned environment until use.

Those edible parts are constituted in particular by the bulb and/or the fruit and are preferably subjected to a prior processing before cooking in particular peeling and optional cutting and/or subdivision into cubes.

In accordance with the present invention, the edible part of interest is cut and/or divided into cubes (cubed) so that the vegetable material from Alliaceae used in the food preparation according to the invention includes or consists of individual separate pieces of small dimensions. According to the method of the invention, such distinct pieces are preferably first acidified and then partially dehydrated in order to reduce their moisture, then mixed to other ingredients provided in the food preparation of the invention according to pre-established ratios.

Preferably, the individual pieces of vegetable have a shape as cubes even though they may have other functionally equivalent shapes such as scales, slices, flakes and the like. The size of individual pieces of the vegetable material from Alliaceae, to be understood as the maximum extension, is preferably between 1 mm and 20 mm, especially between 3 mm and 6 mm.

Furthermore, the partial dehydration is carried out preferably in such a way as to obtain in the at least one vegetable from Alliaceae, at the end of the dehydration, a moisture content of between 50 and 80%.

Advantageously, the Alliaceae vegetable so divided maintains the organoleptic and nutritional properties of the whole vegetable substantially unaltered, even after partial dehydration and optional mixing with the edible oil carried out according to the present invention, since the cell juices of the vegetable are substantially preserved.

At the same time, the division into pieces of the Alliaceae vegetable exposes a large surface area to the cooking of the Alliaceae vegetable in particular in the edible oil during the subsequent use of the preparation according to the invention in the preparation of finished food products ready for consumption or of the fries.

In the food preparation according to the invention, the regulator of acidity can be any food additive capable of controlling the pH of the food preparation to optimal values for its preservation so as to prevent or at least slow down the proliferation of bacteria and / or molds.

Preferably, the regulator of acidity is added in such amounts to have in the final food preparation an acid pH not exceeding 4.6, which advantageously prevents the proliferation of a good part of the microbial flora, in particular of the *Clostridium Botulinum.*

For this purpose, in the food preparation according to the invention, the proportions of the acidity regulator may range between 0.050% and 0.25% by weight, in particular between 0.10% and 0.20% by weight on the weight of the at least one vegetable from Alliaceae.

According to a preferred aspect of the present invention, the regulator of acidity is also an antioxidant or have antioxidant properties. Alternatively, the food preparation can contain an antioxidant in addition to an acidity regulator i.e. as distinct additives. In this way, phenomena of rancidity are prevented as well as at the same time the browning of the at least one vegetable from Alliaceae (e.g. onion) divided into separate pieces (e.g. cubes) thereby maintaining the original color of the vegetable during storage.

Preferably, the acidity regulator and/or antioxidant is selected from the group comprising ascorbic acid, citric acid, their salts, in particular their sodium, potassium and/or calcium salts, sulfites (i.e. salts of sulfur dioxide) and combinations thereof.

In particular, the regulator of acidity is also an antioxidant and is selected from ascorbic acid, a salt of ascorbic acid such as, in particular, sodium ascorbate or calcium ascorbate and combinations thereof.

As mentioned above, according to one embodiment, the food preparation of the invention may contain an edible oil.

The edible oil is to be understood as any edible oil suitable for cooking/frying of food. It is preferably a vegetable oil, that is an edible oil derived from seeds or other parts of a plant, having a relatively high smoke point to avoid significant phenomena of oil degradation that might adversely affect the organoleptic and nutritional characteristics of the final food product obtained from the food preparation according to the invention.

Preferably, the vegetable oil is selected from the group comprising olive oil, in particular extra-virgin olive oil, peanut oil and refined palm oil.

Preferably, in the food preparation according to the invention, the amount of edible (vegetable) oil is between 1% and 50%, in particular between 10% and 20% by weight on the weight of the at least one vegetable from Alliaceae partially dehydrated.

According to a preferred embodiment, the food preparation according to the invention contains no additional components other than the vegetable from Alliaceae, the acidity regulator and the antioxidant (such as one or more additives having the dual function or as additives with distinct functions) and possibly the edible oil where required.

According to another embodiment, the food preparation can further comprise other components different from the components indicated above and in mixing with the latter.

Such additional components may be in particular vegetable components different from Alliaceae, as commonly used for conventional fried, for example vegetable components such as carrot and celery (preferably divided into small pieces in a similar way as indicated above for the vegetables from Alliaceae) and/or spices such as salt and pepper.

In this case, preferably, at least the additional vegetable components are previously divided into separate pieces in the same way described above for Alliaceae vegetables. Furthermore, at least these additional components are previously mixed with the Alliaceae vegetables and subjected together to the latter to partial dehydration in the same conditions of partial dehydration of Alliaceae vegetables until reaching a moisture content of between 50% and 80%.

As regards the method of production of the preparation according to the invention, there is to say that it may comprise at first a step of prior treatment of the vegetable(s) from Alliaceae in order to prepare that/those vegetable/s in the best conditions for an optimal cooking.

Such treatment may comprise the steps of peeling, cutting and/or subdivision into pieces (e.g. cubing) of the part of the Alliaceae of interest, normally the bulb and/or the fruit, in order to obtain a division into distinct pieces, preferably in the form of cubes (but other forms are also possible such as flakes, slices and the like) of reduced dimensions. As mentioned previously, the size of individual pieces are preferably between 1 mm and 20 mm, especially between 3 mm and 6 mm.

The above operations can be made by equipments for peeling and cutting and/or subdivision into small cubes (dicing). Such equipments are conventional per se.

In case the food preparation should comprise additional vegetable components different from Alliaceae, even these vegetable components may be subjected to a preventive treatment that comprises operations of peeling, cutting and/ or subdivision into pieces in a manner similar to that illustrated above for the Alliaceae vegetables.

Then, it follows a step of addition of the acidity regulator to the at least one Alliaceae vegetable and to any further vegetable components different from Alliaceae so as to obtain a mixture. The acidity regulator is added in such amounts to have in the final food preparation an acid pH not exceeding 4.6, which advantageously prevents the proliferation of a good part of the microbial flora, in particular of the *Clostridium Botulinum.*

In particular, the acidity regulator may be added in proportions of between 0.05% and 0.25% by weight, in particular between 0.10% and 0.20% by weight on the weight of the at least one vegetable from Alliaceae in distinct pieces.

Advantageously, the acidity regulator is also an antioxidant or alternatively an antioxidant can also be added in addition to the acidity regulator to form the above mixture.

At this point, the mixture containing the at least one vegetable from Alliaceae divided into separate pieces, the acidity regulator and any additional vegetable components other than Alliaceae vegetables is subjected to partial dehydration. This step of partial dehydration is carried out for a sufficient time so that said Alliaceae vegetables (and possibly said additional vegetable components) reach a predetermined moisture content, preferably between 50% and 80%.

According to a preferred embodiment of the invention, the step of partial dehydration may be carried out by subjecting the mixture containing the vegetable components divided into separate pieces to centrifugation for a predetermined time depending on the amount of water to be removed from such vegetable components. The centrifugation can be performed with equipments conventional per se such as in particular centrifuges suitable for vegetables. Advantageously, with the centrifugation technique, the partial dehydration (removal of water) is carried out "cold" and without the addition of specific additives such as salt (as taught for example in the application U.S. 2002/071896) thereby maintaining more unaltered the organoleptic and nutritional properties of vegetable components, in particular Alliaceae vegetables.

Alternatively, the step of partial dehydration may be conducted at "hot", investing the vegetable material to be partially dehydrated with a stream of a heated gas, in particular a stream of air heated at a predetermined and controlled temperature using for this purpose equipments per se conventional.

At this point, the mixture containing the at least one vegetable from Alliaceae partially dehydrated, the acidity regulator and optionally additional vegetable components also partially dehydrated may be subjected to weighing and possibly mixed with an edible oil according to preset proportions.

Preferably, the edible oil is mixed in proportions of between 1% and 50%, in particular between 10% and 20% by weight on the weight of said at least one vegetable from Alliaceae partially dehydrated.

To the resulting mixture further ingredients may be added if necessary according to need to use and tastes, such as salt and spices, not yet mixed with the at least one vegetable from Alliaceae before the step of partial dehydration.

Subsequently, the mixture containing at least one vegetable material of Alliaceae, an acidity regulator and /or antioxidant and optionally an edible oil is subjected to irradiation with a light beam containing ultraviolet light.

According to an embodiment of the invention, the irradiation step is carried out by irradiating said mixture with ultraviolet light, in particular UV-C rays (280-100 nm), for a time comprised between 1 second and 40 seconds.

According to another preferred embodiment of the invention, the food preparation is irradiated with pulses of a polychromatic light beam containing ultraviolet rays (180-1100 nm) having high intensity and short duration (pulses of some hundreds of microseconds) according to the HIPL technology.

This technology exploits the bactericidal effect of the UV rays contained in the high-intensity light pulses emitted by an appropriate light source such as a Xenon lamp.

Advantageously, the irradiation with ultraviolet light carried out according to the invention allows to reduce the microbial load (especially fungi and bacteria) without significantly altering the organoleptic and nutritional characteristics of the vegetable from Alliaceae, in particular texture, color and flavor, which are similar to those of the vegetable from Alliaceae in the fresh state. The same advantages are achieved, often even more effectively by performing the irradiation with pulses of a beam of polychromatic light containing ultraviolet rays according to the aforementioned HIPL technology.

After the irradiation step with UV light or with pulses of polychromatic light according to the HIPL technology, said mixture is packaged in at least one container for foods.

The container for foods can be of any known type, for example can be a rigid, semi-rigid or loose container provided that it is suitable for the subsequent treatment with microwaves which is shown here below in the present description.

The container may have any shape and may be made of glass or plasticized aluminum or polypropylene with inner casing made of a material suitable for storing food products. In addition, the container may have an airtight closure and can be advantageously re-closable and also can be equipped with a dosing device, in itself conventional, in particular for releasing preset quantities of the food preparation according to the invention from the container during use of the preparation as needed.

The packaging is carried out by introducing the mixture containing at least one vegetable material from Alliaceae, an acidity regulator and/or antioxidant and optionally an edible oil in preset doses into the respective containers by means of appropriate equipments (e.g. metering devices) per se conventional. Such packaging may also be carried out, if desired, under vacuum, i.e. by applying a preset vacuum inside the containers or under modified atmosphere, i.e. by introducing into the containers a packaging gas such as nitrogen or carbon dioxide or a mixture thereof, in order to modify the atmosphere inside the containers.

Alternatively, the mixture containing at least one vegetable material from Alliaceae, an acidity regulator and/or antioxidant and optionally an edible oil may be formed or obtained in its final composition during the packaging of the same in the at least one food container of the above type.

In the case of semi-rigid or floppy containers, it is possible to introduce into the container first a metered quantity of an acidity regulator and/or antioxidant and optionally of an edible oil and then a metered quantity of the vegetable material. Instead in case of packaging in a rigid container, such as a jar, it is also possible, if desired, to proceed to topping up the container for example with edible oil. In this case, the content of the overall edible oil in the final preparation may be higher and reach a weight ratio with respect to the vegetable material from Alliaceae equal to 1:1.

The packaged food preparation thus obtained is then subjected to santization by using microwaves.

In accordance with the present invention, the sanitization is carried at "cold", i.e. by maintaining the temperature of the packed food preparation at room temperature for the duration of treatment with microwaves. Preferably, the sanitization step is carried out by treating the packed food preparation with microwaves for a time comprised between 5 seconds and 30 seconds.

In this way, a significant reduction of the number of microorganisms, such as bacteria, yeasts and fungi, sensitive to microwaves is achieved which results consequently in an extension of the shelf life of the food preparation of the invention also in this case without modifying significantly the nutritional contents and the organoleptic characteristics of the components of the food preparation, in particular of the vegetable components, which results to be very similar if not corresponding to those of the components in the fresh state.

In fact, it is remarked that with the method according to the invention the sanitizing effect is carried out by the microwaves themselves which are used for reduced times and not through the heating of the product as in the conventional pasteurization.

The sanitization with microwaves can be carried out through equipments per se conventional such as microwaves ovens. The treatment times with microwaves are sufficiently short such that microwaves can exert their killing action against microbial and fungal flora without heating the packed product.

The sanitization with microwave can be carried out with a process in continuous or discontinuous. In the case of continuous process, the containers containing the food preparation can be made to flow continuously, e.g. through a conveyor belt, within the chamber of the microwave oven while at the same time they are irradiated with microwaves for the desired time.

The food preparation obtained by the method of the invention can be stored for a relatively long period at refrigerated temperature.

In the light of what has been described above it is evident that the food preparation according to the invention solves brilliantly the technical problem mentioned above and achieves important advantages compared with prior art.

Indeed, thanks to the fact that with the method of the invention the at least one vegetable from Alliaceae is partially dehydrated to a predetermined moisture content and is subjected to irradiation with UV light or with pulses of polychromatic light according to the HIPL technology, the microbial load is effectively reduced while preserving at the same time the organoleptic and nutritional characteristics of the fresh vegetable to the advantage of the quality of food preparation according to the invention and of the food or food product that will be prepared subsequently by it. As a result of those treatments, the food preparation according to the invention has also a good shelf life at refrigerated temperature before use. Such shelf life can be further extended through the "cold" treatment with microwaves which, unlike conventional thermal sanitization treatments (e.g. classical pasteurization), also does not modify the organoleptic and nutritional characteristics of the vegetable components such as Alliaceae.

In addition, the use of the irradiation with UV or with pulses of polychromatic light according to the HIPL technology and subsequently with microwaves involves treatment times relatively short which also allow a significant reduction of the energetic costs to the full advantage of reduced implementation costs of the process according to the invention.

Furthermore, since Allieaceae vegetables are not subjected to frying or any other heating treatment but simply irradiated with UV light or with pulses of polychromatic light according to the HIPL technology and then with microwaves without heating the product, the food preparation of the invention has a better digestibility in particular with respect to traditional fried and also the food product derived from it turns out to be better digested. Advantageously, the irradiation with UV light or according to the HIPL technology first and with microwaves after of the Alliaceae vegetables occurs for a very short time so that the organoleptic and nutritional characteristics of the Alliaceae vegetables are advantageously preserved avoiding in particular browning or burning.

It should also be noted that the food preparation according to the invention can advantageously have a reduced edible oil content (in particular with respect to the amount of edible oil normally required to prepare a traditional fried equal the amount used of Alliaceae vegetables) to the advantage a better digestibility, nutritional quality and a significant reduction of production costs of the preparation according to the invention.

In the case of use of the food preparation according to the invention for the preparation of food products (e.g. fries) to be used in turn as food bases for subsequent food preparations, there is to say that by maintaining substantially unaltered the organoleptic characteristics of the Alliaceae vegetables, both during the production process of the preparation according to the invention and during its shelf-life, the products obtained from the food preparation of the invention have organoleptic and nutritional characteristics comparable if not better than those of corresponding conventional products.

Therefore, the packaged food preparation of the invention can be used effectively and advantageously as a vegetable food base (for example a base of onion and/or garlic with oil) both for the direct preparation of food or food products ready to eat by mixing it to further ingredients of the recipe of interest, and for the preparation of further intermediate food preparations, such as fried based on Alliaceae (for example a fried of onion and/or garlic with oil), all the above without having the disadvantages previously complained with reference to the prior art. In the latter case, such intermediate preparations (such as fried) will constitute in turn starting food base for obtaining food or food products according to the most varied recipes in particular but not exclusively of the Mediterranean cuisine.

In particular, as regards the use in the food industry or within the collective catering, the food preparation of the invention is advantageously an intermediate product ready to use which greatly simplifies and speeds up the operations for preparation of the finished products that use a preparation based on Alliaceae such onion and/or garlic as a food base.

At the same time, thanks to the food preparation of the invention, the food industry can do without a series of operations in the production line of the above finished products which, as mentioned above, are particularly onerous such as the purchase and storage of the raw vegetable material and cooking of the same.

Moreover, the packaged food preparation of the invention can be purchased by the food industry and/or collective catering at the time when there is an actual need for use with a method of packaging and quantities supplied adaptable to each individual need.

As regards instead the retail use of the food preparation of the invention (for example household use or in the collective catering), at least the following advantages are evident:
- considerable saving of time by the user / consumer as he/she can use directly the food preparation of the invention as such as a food base to then continue with the addition of other ingredients depending on the specific culinary composition that he/she will have to prepare,
- reduction of the domestic storage of Alliaceae such as onion and garlic which always involve a certain difficulty for the conservation due to their particular composition,
- elimination of the physical discomfort caused by the liberation of factors making eyes water which are released during the cutting of the Alliaceae, in particular the onion,
- reduction of waste products by the user / consumer, thus reducing the amount of organic waste to be disposed of,
- possibility to use only the amount of food preparation really necessary for the culinary composition of interest (with the unused portion that may continue to be effectively stored in the same container which can be advantageously of the re-closable type), thereby avoiding to waste the part of the Alliaceae vegetable possibly in excess and difficult to preserve as it is often the case of the culinary preparations at home.

The present invention will now be described by means of some examples of realization which are given by way of indicative and not limiting purpose.

### Example 1

### Preparation of a packaged food preparation based on onion

With conventional equipment, 0.5 kg of fresh onions (bulb) are peeled and cut so as to form small cubes of size between 3 mm and 6 mm.

0.5 g of ascorbic acid are added to such cubed onions to give a mixture. The pH of this mixture is 4-4.5.

Subsequently, the mixture of cubed onion and ascorbic acid is transferred in a centrifuge for vegetables where it is subjected to partial dehydration. This operation is carried out by rotating the centrifuge containing the above mixture at a speed of 600 revolutions / minute for a time of 2 minutes so as to have a reduced moisture content between 50% and 80% in these cubes.

Alternatively, the operation of partial dehydration can be carried out in a conventional equipment by subjecting the above mixture to a stream of warm air at a substantially constant temperature of 50°C for 320 seconds so as to have in the cubes a reduced moisture content, comprised between 50% and 80%.

The mixture containing the partially dehydrated onion cubes and ascorbic acid is then subjected to pulse irradiation with HIPL technology through a Xenon lamp for a duration of each pulse equal to 360 microseconds. The repetition frequency of the pulses is 3 Hz. The overall time of pulse irradiation is 4-5 seconds.

After the irradiation with pulsed ultraviolet light, the mixture is introduced (packaged) in preset doses into respective glass containers fitted with hermetic sealing and re-closable.

The containers are then sanitized in a microwave oven of 2450 MHz for a time of 30 seconds, thereby obtaining the food preparation according to the invention.

The packaged food preparation so obtained has a relatively long shelf life at refrigerated temperature and is suitable for use as such in household, industrial and/or collective catering as a food base for the preparation of sauces, soups and broths and sauces containing onion and for the preparation of fried based on onion.

The effectiveness of the method of the invention, in particular of the treatment by HIPL, was determined by comparative tests comparing samples of diced onion to which was added the antioxidant agent and pulsed irradiated by HIPL in the manner indicated above with samples of diced onion in fresh state to which was added the antioxidant agent as indicated above without subsequent treatment with HIPL.

For this purpose, samples of diced onion treated with HIPL and samples of diced onion in fresh state not treated were subjected to microbiological analysis to characterize the endogenous flora present as well as to colorimetric measurements.

In particular, it was measured the total microbial load (CMT ) at 30°C according to the criteria of the standard UNI EN ISO 4833 and yeasts and molds at 25°C according to the standard ISO 21527.

The samples of diced onion in fresh state showed a level of CMT equal to 1.4 x 10³ CFU/g while yeasts and molds resulted to be restrained equal to 30 CFU/g . Conversely, samples of diced onion treated with HIPL showed, after treatment, a reduction of the charge equal to 4x10² CFU / g while the level of yeasts and molds was reduced by about 30% . The colorimetric measurements were carried out using tri- stimulus colorimeter which is a tool characterized by high accuracy and repeatability and is interfaced with a computer. It is able to measure color differences between two different samples of the same material in a quick and accurate way. The measurements were carried out on samples exposed to air at room temperature at regular intervals for a total period of 120 minutes. In this regard, it has been observed for the samples treated with HIPL a substantial color stability throughout the observation period with the color that has remained essentially unchanged from the initial one, i.e. the color determined before HIPL treatment inferred from measurements on untreated onion samples.

The above measures have confirmed the effectiveness of the HIPL treatment adopted in the method according to invention in terms of a significant reduction of the microbial charge, useful for the purposes of greater shelf life of the product, accompanied by the maintenance of the organoleptic characteristics of the vegetable from Alliaceae (in this case onion), which are entirely similar to those of the vegetable in the fresh state (not treated).

### Example 2

### Preparation of a packaged food preparation based on onion

A food preparation in accordance with example 1 is prepared with the difference that the mixture containing the diced onion partially dehydrated and ascorbic acid is subjected to irradiation with UV-C ultraviolet light emitted from a plurality of lamps arranged along the path of the mixture. The mixture is subjected to irradiation with UV-C light for a total time of 30-40 seconds.

At the end of irradiation with ultraviolet light, the mixture is introduced ( packaged) in preset doses in respective glass containers provided with hermetic sealing and re-closable.

The containers are then sanitized in a microwave oven having a frequency of 2450 MHz for a time of about 30 seconds.

The packaged food preparation so obtained has a relatively long shelf life at refrigerated temperature and is suitable for use as such in household, industrial and/or collective catering as a food base for the preparation of sauces, soups and broths and sauces containing onion and for the preparation of fried based on onion.

The effectiveness of the method of the invention, in particular the treatment with ultraviolet light (UV-C , was determined by comparative tests analogous to those described in Example 1 by comparing samples of diced onion to which was added the agent antioxidant and irradiated with ultraviolet light in the manner indicated above with samples of diced onion in the fresh state to which was added the antioxidant agent as indicated above without subsequent treatment with ultraviolet light.

The results of tests on samples of diced onion treated with ultraviolet light (UV-C were similar to those reported above in Example 1 for the samples of diced onions treated with HIPL. Therefore, also the treatment with ultraviolet light performed according to invention results to be effective in terms of a significant reduction of the microbial charge accompanied by a substantial maintenance of the organoleptic characteristics of the vegetable from Alliaceae (onion in this case) in the fresh state (not treated).

### Example 3

### Preparation of a packaged food preparation based on onion and garlic

A food preparation is prepared in accordance with the method described in Example 2 except for the fact that the vegetable material from Alliaceae used at beginning consists of 300 g of onion and 200 g of garlic both in the form of small cubes of size between 3 mm and 6 mm.

The packaged food preparation thus obtained has a relatively long shelf life at refrigerated temperature and maintains substantially unaltered the organoleptic characteristics of the vegetable from Alliaceae (onion and garlic in this case) in the fresh state. The packaged food preparation is suitable for use as such in household, industrial and/or collective catering as a food base for the preparation of sauces, soups and broths containing onion and garlic and for the preparation of fried based on onion and garlic.

### Example 4

Preparation of a packaged food preparation based on onion, carrots and celery

With conventional equipment, 0.5 kg of fresh onions (bulb) are peeled and cut so as to form small cubes of size between 3 mm and 6 mm.

Subsequently, 0.10 kg of carrots and 0.10 kg of celery previously peeled and cut so as to form small cubes of size between 3 mm and 6 mm are added to the cubed onions.

0.7 g of ascorbic acid are added to such cubed vegetables to give a mixture. The pH of this mixture is 4-4.5.

The mixture of cubed onion, ascorbic acid and cubed carrots and celery is transferred in a centrifuge for vegetables where it is subjected to partial dehydration. This operation is carried out by rotating the centrifuge containing the above mixture at a speed of 600 revolutions/minute for a time of 3 minutes so as to have a reduced moisture content between 50% and 80% in these cubes.

Alternatively, the operation of partial dehydration can be carried out in a conventional equipment by subjecting the above mixture to a stream of warm air at a substantially constant temperature of 50°C for 320 seconds so as to have in the cubes a reduced moisture content, comprised between 50% and 80%.

At this point, the mixture containing the above partially dehydrated cubes and ascorbic acid is subjected to irradiation with UV-C ultraviolet light emitted from a plurality of lamps arranged along the path of the mixture. The mixture is subjected to irradiation with UV-C light for a total time of 15 seconds.

At the end of irradiation with ultraviolet light, the mixture is introduced ( packaged) in preset doses in respective glass containers provided with hermetic sealing and re-closable.

The containers are then sanitized in a microwave oven having a frequency of 2450 MHz for a time of 30 seconds.

The packaged food preparation so obtained has a relatively long shelf life at refrigerated temperature and maintains substantially unaltered the organoleptic characteristics in the fresh state of the vegetables present. The packaged food preparation is suitable for use as such in household, industrial and/or collective catering as a food base for the preparation of sauces, soups and broths and sauces containing onion, carrots and celery and for the preparation of fried based on onion, carrots and celery.

### Example 5

### Preparation of a packaged food preparation based on at least one vegetable from Alliaceae in olive oil.

A food preparation in accordance with the method described in any one of the previous examples is prepared with the further addition of an edible oil, specifically olive oil.

This olive oil is added in a quantity of 0.05 liters to the mixture containing the Alliaceae vegetable(s) in cubes partially dehydrated and ascorbic acid before the irradiation step with ultraviolet light. The content of olive oil is equal to 15% by weight on the weight of the cubes of the Alliaceae partially dehydrated vegetable(s).

The packaged food preparation so obtained has a relatively long shelf life at refrigerated temperature and maintains substantially unaltered the organoleptic characteristics in the fresh state of the vegetables present. The packaged food preparation is suitable for use as such in household, industrial and/or collective catering as a food base for the preparation of sauces, soups and broths containing onion and garlic and for the preparation of fried based on onion and garlic.

## Claims

1. Food preparation comprising at least one vegetable from Alliaceae divided into individual pieces and an acidity regulator in mixture between them, said food preparation being irradiated with a light beam containing ultraviolet light and sanitized by means of microwaves.

2. Food preparation according to claim 1, wherein said mixture is irradiated with ultraviolet rays, preferably UV-C rays (100-280 nm) or is irradiated with high-intensity pulses of a beam of polychromatic light containing ultraviolet rays.

3. Food preparation according to claim 1 or 2, wherein said pieces have a size between 1 mm and 20 mm, preferably between 3 mm and 6 mm.

4. Food preparation according to any one of the preceding claims, wherein said acidity regulator is added in such amounts to have in the final food preparation an acid pH not exceeding 4.6, preferably in proportions of between 0.050% and 0.25% by weight, in particular between 0.10% and 0.20% by weight on the weight of the at least one vegetable from Alliaceae divided into individual pieces.

5. Food preparation according to any one of the preceding claims wherein said acidity regulator is selected from the group comprising ascorbic acid, citric acid, their salts, in particular their sodium, potassium and/or calcium salts, sulfites and combinations thereof.

6. Food preparation according to any one of the preceding claims, wherein said at least one vegetable from Alliaceae is partially dehydrated so as to have a moisture content comprised between 50% and 80%.

7. Food preparation according to any one of the preceding claims, further comprising at least one edible oil, preferably at least one vegetable oil selected from the group comprising olive oil, in particular extra-virgin olive oil, peanut oil and refined palm oil.

8. Food preparation according to claim 7, wherein the content of said edible oil is between 1% and 50%, preferably between 10% and 20% by weight on the weight of the at least one vegetable from Alliaceae partially dehydrated.

9. Food preparation according to any one of the preceding claims, wherein said at least one vegetable from Alliaceae is selected from the group comprising onion, leek, garlic, scallion, Borettane, chive and combinations thereof and is preferably constituted by onion, garlic or combinations thereof.

10. Food preparation according to any one of the preceding claims, further comprising at least one vegetable component different from Alliaceae, preferably carrots and/or celery and/or comprising spices, preferably salt and/or pepper.

11. Food preparation according to claim 10 wherein said at least one vegetable component different from Alliaceae is present in the form of separate pieces partially dehydrated, preferably cubes partially dehydrated, preferably having a size of between 1 mm and 20 mm, in particular between 3 mm and 6 mm and moisture content of between 50% and 80%.

12. Method for obtaining a food preparation according to any one of the preceding claims, comprising the steps of:
- subdivision of at least one vegetable from Alliaceae into separate pieces;
- addition of an acidity regulator to said at least one vegetable from Alliaceae in separate pieces to form a mixture,
- optional addition of at least one edible oil to said mixture,
- irradiation of the mixture with a light beam containing ultraviolet light,
- packaging of the mixture irradiated with a light beam containing ultraviolet light in at least one container for foods,
- sanitization of the mixture packed in said at least one container for foods by means of microwaves.

13. Method according to claim 12, wherein said mixture is irradiated with ultraviolet light, preferably UV-C rays (280-100 nm), for a time comprised between 1 second and 40 seconds.

14. Method according to claim 12, wherein said mixture is irradiated with high-intensity pulses of a polychromatic light beam containing ultraviolet rays according to the HIPL method for a time preferably comprised between 1 second and 10 seconds.

15. Method according to any one of the preceding claims from 12 to 14, wherein said sanitization of the packaged mixture is carried out for a time comprised between 5 and 30 seconds maintaining the packaged mixture substantially at room temperature.

16. Method according to any one of the preceding claims from 12 to 15, wherein said mixture further comprises at least one vegetable component different from Alliaceae optionally divided into separate pieces.

17. Method according to any one of the preceding claims 12 to 16, further comprising, after the addition of the acidity regulator and before the irradiation step with a light beam containing ultraviolet light, the step of subjecting said at least one vegetable from Alliaceae and optionally said at least one vegetable component different from Alliaceae in mixture with the acidity regulator to partial dehydration until reaching a moisture content between 50% and 80%.

18. Method according to claim 17, wherein said partial dehydration is carried out by centrifugation or through a stream of a heated gas.

19. Method according to any one of claims 12 to 18 wherein said separate pieces of said at least one vegetable from Alliaceae and optionally of said at least one vegetable component different from Alliaceae are preferably cubes, said separate pieces having dimensions of between 1 mm and 20 mm, preferably between 3 mm and 6 mm.

20. Package comprising a container for foods and a food preparation according to any one of claims 1 to 11 contained in said container for foods.
